(19)

**Europäisches Patentamt**
**European Patent Office**
**Office européen des brevets**

(11) **EP 4 163 672 B1**

(12) **EUROPEAN PATENT SPECIFICATION**

(45) Date of publication and mention
of the grant of the patent:
**25.06.2025 Bulletin 2025/26**

(21) Application number: **21201301.5**

(22) Date of filing: **06.10.2021**

(51) International Patent Classification (IPC):
***G01S 13/931*** *(2020.01)* ***G01S 13/87*** *(2006.01)*
***B62D 13/06*** *(2006.01)*

(52) Cooperative Patent Classification (CPC):
**G01S 13/931; G01S 13/87;** B62D 13/06;
B62D 15/027; G01S 2013/9315; G01S 2013/9317;
G01S 2013/93185; G01S 2013/93272;
G01S 2013/93274

(54) **REVERSING ASSISTANCE DEVICE AND METHOD FOR ASSISTING A VEHICLE DURING REVERSING OPERATION**

RÜCKFAHRASSISTENZVORRICHTUNG UND VERFAHREN ZUR ASSISTENZ EINES FAHRZEUGS WÄHREND DES RÜCKFAHRVORGANGS

DISPOSITIF D'AIDE À LA MARCHE ARRIÈRE ET PROCÉDÉ POUR ASSISTER UN VÉHICULE PENDANT UNE OPÉRATION EN MARCHE ARRIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.04.2023 Bulletin 2023/15**

(73) Proprietor: **KNORR-BREMSE Systeme für
Nutzfahrzeuge GmbH
80809 München (DE)**

(72) Inventors:
- **THUM, Daniel**
  **81927 Munich (DE)**
- **MERZA, Valér**
  **2000 Szentendre (HU)**
- **GREBE, Jan**
  **82319 Munich (DE)**
- **KOMLÓS, Tamás**
  **6448 Csávoly (HU)**

(56) References cited:
DE-A1- 102004 059 596    DE-A1- 102009 007 990
US-B1- 6 268 803

## Description

The present invention relates to a reversing assistance device and a method for assisting a vehicle during the reversing operation, in particular to a method to support the driver during the reversing operation when approaching an object partially or fully behind a commercial vehicle under a non-rectangular angle.

When a driver of a long vehicle or a vehicle combination performs a reverse operation in the vicinity of an object (e.g. a loading dock or any other obstacle), it is hard to distinguish whether or not the driver is at a safe distance from the obstacle or object. Document US 6,268,803 B1 discloses a system and a method for avoiding collisions. Document DE 10 2009 007 990 A1 discloses a method for determining trailer information. In particular, if the object is not parallel to a back side of the vehicle, conventional sensors are unable to precisely measure the real closest distance along the reversing direction to the object. In such situations, the reversing maneuver mainly depends on the driver experiences and skills. Also a driving unit utilized in autonomous driving may draw wrong conclusions in such situations. Therefore, there is a demand for a system that is able to assist the driver or a driving unit during the reversing operation. At least some of the problems of the conventional device as described before are overcome by a device of claim 1, a control unit of claim 6, and a method according to claim 10. The dependent claims refer to further advantageous realizations of the subject matters of the independent claims.

The present invention relates to reversing assistance device, according to independent claim 1, for a vehicle. The vehicle comprises a radar unit mounted on a rear of the vehicle which is configured to provide distance information to an object that is fully or partially behind the vehicle when approaching the object under an approaching angle $\alpha$ (which may neither be zero nor 90°).

The term "object" can be understood as an object partially or fully located behind the vehicle. The object can further be understood as any obstacle on the reversing way or direction such as a loading dock, a house, a bump, a wall, a column, a pollard, another vehicle etc. The object herein may be particularly an object that is neither fully parallel to the reversing direction nor fully perpendicular to the reversing direction. The object may have any height (e.g. 10 cm or higher, 20 cm or higher).

The vehicle may, in particular, be a commercial vehicle such as a long-haul transport vehicle, a trailer, a towing vehicle, a vehicle combination etc.

The shortest longitudinal distance C is a distance between points where the vehicle and the object hit each other when the reversing continuous. Typically, it a corner of the rear of the vehicle and a point (or line) on the object. Considering that the vehicle is approaching the object under an angle $\alpha$, it should be appreciated that a closest distance R measured by the radar unit may, in general, be greater than the shortest longitudinal distance C.

The radar unit may comprise at least one of the following: an antenna array, a phased array antenna, a MIMO Radar or any other means to enable the radar unit to measure not only the closest distance(s) R, but also the angle $\alpha$ or longitudinal and/or lateral position information from the radar unit to reflection point(s) of the return signals. The radar unit may also comprise multiple radar elements, which may be placed at different locations, each comprising a transmitter and a receiver so that multiple distances can measured. In other words, the exemplary radar unit may include multiple transmitters and receivers to enable an angular resolution for the received signals.

The evaluation unit is configured to determine the parameters listed below, and to transmit to other systems at least one of:

- a longitudinal distance F between the rear of the vehicle and the reflection point on the object measured along reversing direction y, by using: $F = R \times \sin \alpha$, wherein R is the closest distance and $\alpha$ the approaching angle;
- a lateral distance "b" between the radar unit and the reflection point measured along a lateral direction x, in particular by using: $b = R \times \cos \alpha$, wherein R is the closest distance and $\alpha$ is the approaching angle;
- the shortest longitudinal distance C, by using: $C = F + (b-a) \times b/F$, wherein "a" is a distance from the radar unit to a rear corner of the vehicle,
- a compensation for an offset of a position of the radar unit from a reference position (predetermined position such as a middle or central position of the vehicle's rear).

The other systems may include another control unit in the vehicle or a driving unit and may issue, upon receipt of one or more of the above information, a warning or may initiate other actions (e.g. a braking action).

Therefore, although the radar unit may be mounted at a central position or a middle position, this is not necessary. The radar unit may be mounted at any position at the rear of the vehicle and the evaluation unit may take into account the distance (offset) of the radar unit from a corner or from a middle line of the vehicle rear. Hence, according to embodiments, the evaluation unit is configured to compensate any offset in the position of the radar unit. The corresponding information about the mounting position may be stored in the radar unit or in the evaluation unit or may be obtained from any storage device in the vehicle.

The vehicle may be operated by a driver or by a driving unit and, optionally, the evaluation unit is further configured to issue a signal to the driver or the driving unit, in case the determined shortest longitudinal distance C, is shorter than a threshold (e.g. 2 meters, 1 meter or less).

Optionally, the evaluation unit is configured to issue an alert signal triggering at least one of the following: an acoustic signal, a visual indicator in a cabin or at the vehicle visible for the driver through the side window or side mirrors, a transmission of a warning to other systems (e.g. a vehicle electronic control unit).

The vehicle may further comprise at least one further sensor mounted on a side of the vehicle and configured to detect the object at the side of the vehicle. If so, the evaluation unit may further be configured to receive a detection signal of the further sensor as a confirmation of a presence of the (angled) object.

Optionally, the evaluation unit is configured to be placed in an idle state and an activated state. The reversing support function may be provided, e.g. only, in the activated state which is triggered by (an upcoming) engaging the reverse gear by a driver or a driving unit. The driving unit may e.g. implement a highly automated driving (HAD). Therefore, a driver may or may not be present in the vehicle during driving. The driving unit may control the reversing operation without any input from the driver (which may act only as a supervisor). The initiated or upcoming reverse gear can be sensed by corresponding sensors.

Further embodiments relate to an electronic control unit (ECU) configured to control a function of the vehicle. The ECU may include a reverse assistance device as defined before. Optionally the ECU is one of the following: a brake control unit, a light control unit, a vehicle electronic control unit, a radar control unit (i.e. the reversing assistance device may be implemented in the radar unit itself), a telematic unit.

Further embodiments relate to a vehicle with a radar unit and a reverse assistance device or an ECU as described before. Optionally, the vehicle includes a tractor and a trailer, and the radar unit is mounted at the rear of the trailer. The vehicle here may be understood as any type of motor vehicle used for transporting goods or paying passengers, e.g. long-haul transport vehicles, trucks, bus, etc.

Further embodiments relate to a method for assisting a vehicle while reversing, according to independent claim 10.

The present invention further relates to a computer-readable storage device having software instructions stored thereon, designed to carry out, when executed on a data processor, the method for assisting a vehicle when reversing as defined before. Thus, the method may also be implemented in software or as a computer program product. The order of steps can be arbitrary as long as the desired effect is achieved. Embodiments of the present invention can, in particular, be implemented in an ECU, e.g. by software or a software module. Therefore, embodiments relate also to a computer program having a program code for performing the method, when the computer program is executed on a processor.

Some examples of the systems and/or methods will be described in the following by way of examples only, and with respect to the accompanying figures, in which:

Fig. 1    illustrates a reversing assistance device for a vehicle according to embodiment of the present invention.
Fig. 2    depicts the vehicle reversing toward an object partially or fully behind the vehicle under an angle.
Fig. 3    illustrates further details of a vehicle reversing toward the object under an angle according to embodiments.
Fig. 4    illustrates further details of a vehicle reversing toward an object under another angle according to embodiments.
Fig. 5    depicts a schematic communication through a communication link between different units in the vehicle.
Fig. 6    depicts schematically a flow diagram of a method for assisting a vehicle when reversing toward an object partially or fully behind the vehicle under an approaching angle.

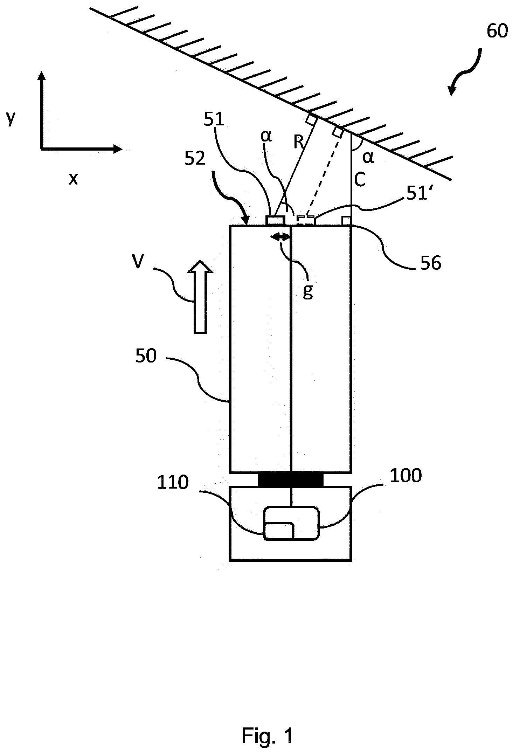

**Fig. 1** depicts a reversing assistance device 100 for a vehicle 50 according to embodiments. The vehicle 50 comprises a radar unit 51 mounted on a rear 52 of the vehicle 50. The vehicle 50 is approaching an object 60 that is partially or fully behind the vehicle 50 with a speed/direction V along a reversing direction y. It is understood that the device may also be installed on the trailer, not necessarily on the tractor, or in any other control or HAD unit present in the vehicle 50.

The radar unit 51 may be mounted on the rear 52 at any position, e.g. spaced from a middle by an offset g. For example, a different radar unit 51' can be placed at a different position (see dashed device 51'). The radar unit 51 transmits radar signals (continuous or pulsed) which are reflected at the object 60 and return subsequently to the radar unit 51. The closest distance R from the radar unit 51 to the object 60 represents the propagation path of the first return signal, which can be easily detected by the radar unit 51. The line of the closest distance R should have a rectangular angle with a surface plane of the object 60. The radar unit 51 will, in general, receive multiple return signals from additional reflections, which encode information about the geometry of the object 60.

According to embodiments, the radar unit 51 is configured to provide an angular resolution in that it provides information enabling a determination of an approaching angle $\alpha$. For this, the radar unit 51 may include an antenna array or multiple transmitter and receivers that allow to measure the angle $\alpha$ for the first and probably strongest return signal. For example, if the radar unit 51 comprises a first radar unit 51 and a second radar unit 51', two shortest distances R1, R2 can

$$\cos \alpha = \frac{R1 - R2}{g}$$

be determined, from where the approaching angle $\alpha$ can be calculated as $\cos \alpha = \frac{R1-R2}{g}$, wherein the closest distance R1 is measured by the radar unit 51, the closest distance R2 is measured by another radar unit 51' and g is the distance between both radar units 51, 51'. According to the present notation, the angle $\alpha$ is greater than 0 and smaller than 180 degrees ($180° > \alpha > 0$).

Since the shortest or closest distance R may always be greater than zero - even if the vehicle 50 hits the object 60 - this information is not reliable. Accordingly, the reversing assistance device 100 comprises an evaluation unit 110 that provides a reversing function by obtaining the distance information R, R1, R2, $\alpha$ from the radar unit 51 and determines a shortest longitudinal distance C. This shortest longitudinal distance C is the distance measured along the reversing direction y from a corner 56 of the vehicle rear 52 to the object 60. If the approaching angle $\alpha$ is smaller than 90°, left-hand corner 56 (as shown in Fig. 1) will be taken, and if the approaching angle $\alpha$ is larger than 90° a right-hand corner (opposite corner of the corner 56 in Fig. 1) will be taken. In any case, the determination of the shortest longitudinal distance C can be done from the corner that will hit the object when the vehicle 50 keeps reversing.

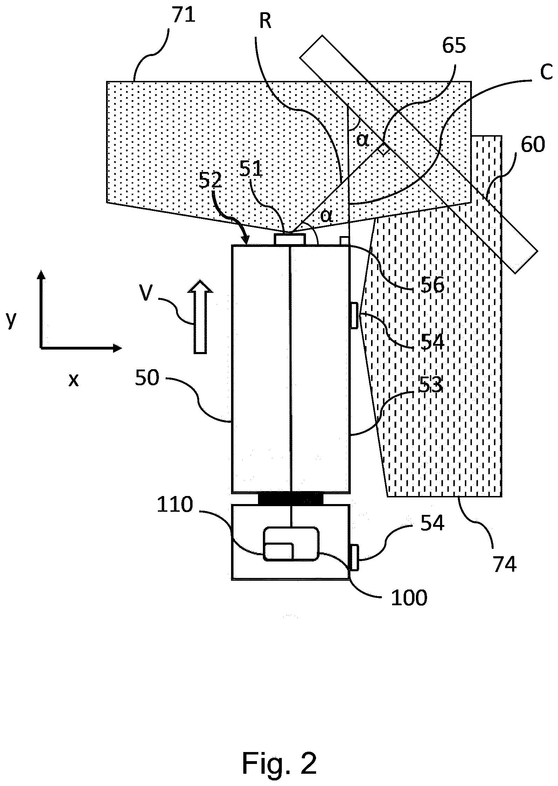

**Fig. 2** depicts another embodiment for the reversing assistance device 100, where the vehicle 50 is reversing along a reversing direction y and the radar unit 51 is mounted at the vehicle rear 52 at a center position (viewed in the depicted top view). Here, the vehicle 50 comprises a trailer 53, a sensor device 54 mounted on the side of the vehicle 50, and the radar unit 51 mounted on the trailer 53. The sensor device 54 may be a camera, another radar or any other sensor that is able to capture information from the surrounding which is mounted anywhere at the side of the trailer or on towing vehicle (e.g. at a mirror).

The radar unit 51 is configured to sense objects behind the vehicle 50 in its coverage area 71. The coverage area 71 includes an area that is strictly behind the vehicle 50 which may be covered only by the radar unit 51, and an area that is behind the vehicle 50, but which can be covered by the sensor device 54, too. The sensor device 54 is configured to sense objects beside the vehicle 50 in its coverage area 74. This coverage area 74 includes an area that is strictly beside the vehicle 50 and can be sensed only by the sensor device 54 (not by the radar unit 51). In an overlapping area of both coverage areas objects can be sensed by the sensor device 54 and by the radar unit 51.

Fig. 2 further shows a reflection point 65 on the object 60 that reflects radar signals emitted from radar unit 51 on the shortest path back to the radar unit 51(corresponding to the closest distance R).

Next, further details will be described of how, according to embodiments, the evaluation unit 110 may determine the shortest longitudinal distance C to thus enable a compensation of a non-rectangular approaching angle $\alpha$.

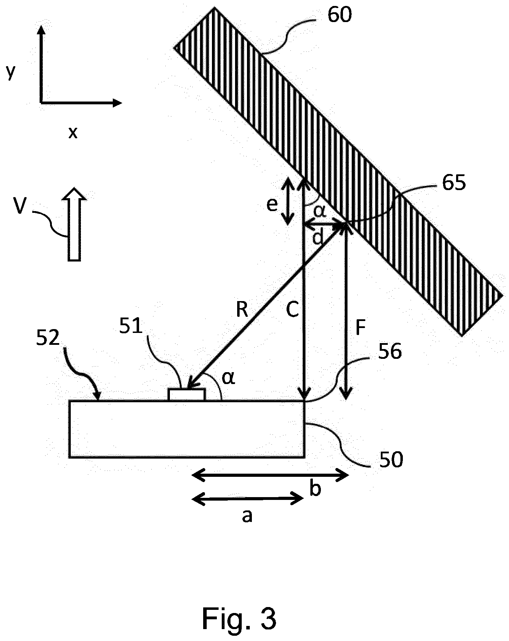

**Fig. 3** illustrates several distances that may be used by embodiments to determine the shortest longitudinal distance C form the exemplary left corner 56 of the vehicle 50 to the object 60 along the reversing direction y. It should be understood, the reversing direction could also be curved for which the shortest longitudinal distance C can still be calculated. However, to keep the calculation simple, it is assumed that the vehicle 50 reverses along a straight line (y-direction).

According to embodiments, the evaluation unit 110 receives from the radar unit 51 the closest distance R and the approaching angle $\alpha$ to the object 60. The determination may be based on multiple distances or a point cloud or even an image of the object 60 or any other information from where the closest distance R and the approaching angle $\alpha$ can be derived. The closest distance R is measured to the reflection point 65, which in this embodiment is not strictly behind the vehicle 50.

A distance between the corner 56 and the radar unit 51 may be known and will be denoted by "a". The evaluation unit 110 may further be configured to determine a reflection distance F. The reflection or longitudinal distance F is a distance measured between the vehicle rear 52 and the reflection point 65 and is calculated as:

$$F = R \times \sin \alpha. \tag{1}$$

The evaluation unit 110 is further configured to calculate a lateral distance "b" between the radar unit 51 and the reflection point 65 by:

$$b = R \times \cos \alpha. \tag{2}$$

Furthermore, the evaluation unit 110 is configured to determine the shortest longitudinal distance C between the corner 56 and the object 60 along the reversing direction y of the vehicle 50 as:

$$C = F + e = F + (b - a) \times \frac{b}{F} \tag{3}$$

wherein "b - a" is denoted in Fig. 3 by "d".

Furthermore, it is apparent that this calculation applies in the case where the approaching angle $\alpha$ is larger than 90°, in which case not the depicted distance "a", but the distance from the radar unit 51 to the opposite corner will be used in the calculation. If the radar unit 51 is in the middle, both distances to the corners will be equal and the calculation does not change.

Furthermore, according to embodiments, the evaluation unit 110 may be able to compensate any offset in the position of the radar unit 51 from a default or reference position (e.g. from a middle line of the vehicle 50). The corresponding information about the mounting position may be stored in the radar unit 51 or in the evaluation unit 110 or may be obtained from any storage device in the vehicle 50. It is understood that the mounting position of the radar unit 51 can be arbitrary, i.e. the offset may relate to any spatial direction. According to embodiments, this information is known (e.g. there is a predetermined mounting position) and will be taken into account when determining the shortest longitudinal distances C. Hence, the offset can be compensated.

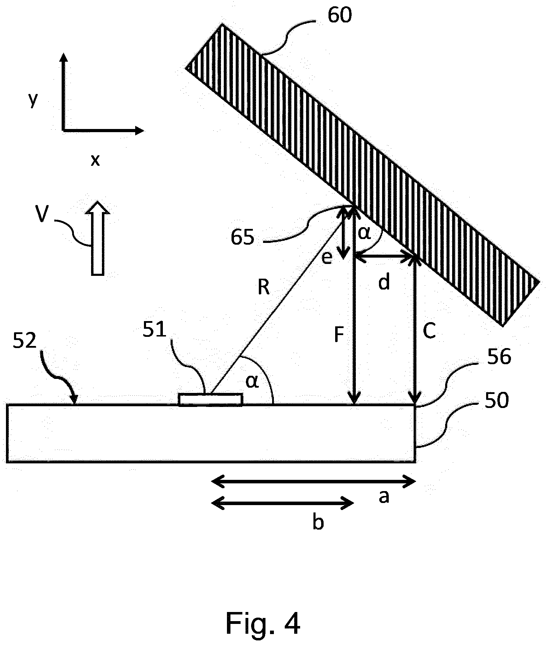

**Fig. 4** depicts an exemplary vehicle 50 reversing toward the object 60 under a larger approaching angle $\alpha$ so that the reflection point 65 is here strictly behind the vehicle 50. All other features are implemented as in the embodiments described before. Therefore, the known distance between the corner 56 and the radar unit 51 can again be denoted by "a" and the evaluation unit 110 may be configured to determine a reflection distance F as a longitudinal distance between the rear 52 and the reflection point 65 and calculated according to equation (1). It may further be configured to determine a lateral distance b according to equation (2) and to determine the shortest longitudinal distance C by equation (3), wherein the value: e = b-a is now negative.

From the situation depicted in Fig. 4 it is further apparent the value of the closest distance R obtained from the radar unit 51 differs from the actual shortest longitudinal distance C (it is longer). There is an immediate risk of collision when the driver or the driving unit would rely on the information.

The vehicle 50 may also include a driving unit that implements a highly automated driving (HAD). Therefore, a driver may or may not be present in the vehicle during driving and the driving unit may control the reversing operation without any input from the driver (who may act only as a supervisor). Hence, the reversing assistance device 100 helps not only a driver of the vehicle 50, but may also assist a driving unit, based on the shortest longitudinal distance information C information, to more accurately and reliably assess of the actual situation.

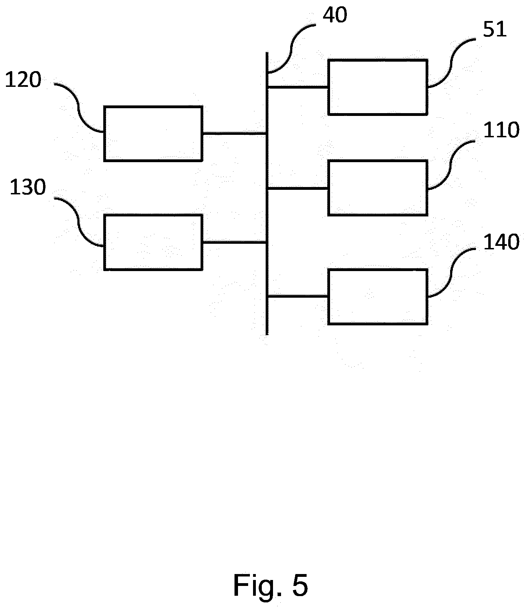

**Fig. 5** depicts a schematic diagram of different units of a vehicle 50 connected to each other via a communication link such as a controller area network, CAN bus 40, or ethernet or another data communication infrastructure. The vehicle 50 may comprise various control units such as a vehicle control unit 140 or a central control unit, a light control unit 130 to control the light indicators, a brake control unit 120, and a control unit integrated in the radar unit 51. The evaluation unit 110 can be in communication with all these control units via the exemplary CAN bus 40 and/or via wireless or via any radio communication to exchange data.

However, according to embodiments, the evaluation unit 110 may be integrated in one these control units, i.e. in the radar unit 51 or in the braking unit 120, or in the light control unit 130 or in the central unit 140. In particular, integration may mean that no additional component has to be added to the vehicle. In other words, after integration of the evaluation unit 110 into a given control unit, both components cannot be separated from each other. All functions of the evaluation unit 110 can be implemented into the given control unit by installing respective software.

Therefore, embodiments relate also to an electronic control unit, ECU, including the reversing assistance device 100. The electronic control unit ECU is then configured to control a dedicated function (e.g. braking, lights) of the vehicle 50 and, in addition, the reversing assistance. For example, if the reversing assistance device 100 is integrated into the brake control unit 120, it will control the vehicle braking as well as provides the reversing function.

The evaluation unit 110 may further be configured to be placed in an idle state and an activated state. The evaluation unit 110 may provide the reversing support function only in the activated state. The activated state may be triggered by engaging a reverse gear by the driver and/or by a driving unit. Similarly, the evaluation unit 110 may be triggered to be in the idle state when no reverse gear is engaged (by engaging a forward gear and/or parking gear) by the driver and/or driving unit.

The evaluation unit 110 may further be configured to determine a speed V of the vehicle 50 and an acceleration of the vehicle 50. The evaluation unit 110 may be further configured to be in communication with internal sensors of the vehicle to obtain the speed V of the vehicle and the acceleration of the vehicle 50. Therefore, the actual reversing speed may be taken into account, for example, for a warning of an imminent collision.

For example, according to the embodiments, the evaluation unit 110 is configured to issue a signal to the driver or the driving unit, in case the determined shortest longitudinal distance C is shorter than a predefined threshold (e.g. 2 meters, 1 meter or less). The predefined threshold may be calculated by the evaluation unit 110 based on a speed V of the vehicle 50 and/or distance information obtained from the radar unit 51. The predefined threshold may be obtained from a control unit of the vehicle 50.

According to the embodiments, the issued signal by the evaluation unit 110 may trigger at least one of the following: an acoustic signal, a blinking marker, a visual indicator in a cabin or visible through a window or mirror, an (electric) transmission of a warning to other systems (any vehicle ECU). The issued signal may have different intensity (e.g. loudness of the acoustic signal or the frequency of the blinking end-outline marker etc.) in relation with the value of the shortest longitudinal distance C.

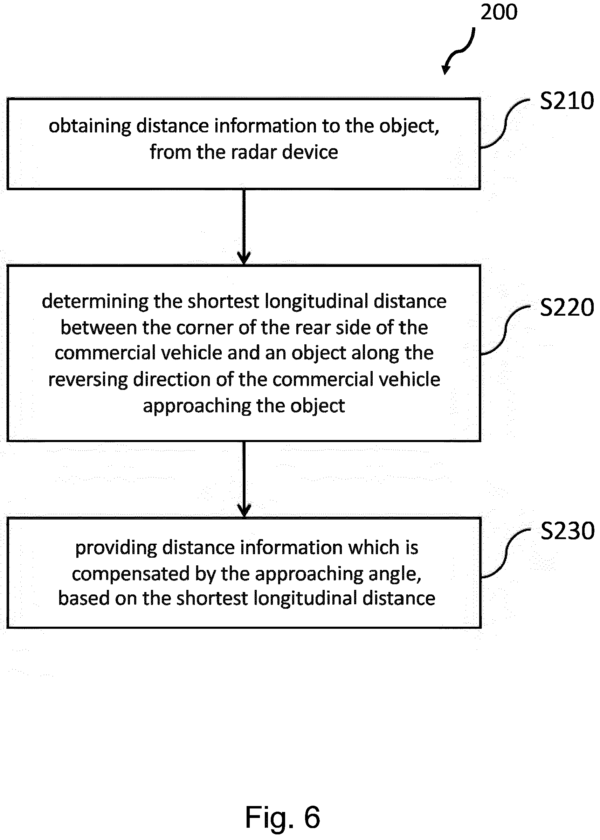

**Fig. 6** depicts a flow diagram of a method 200, for assisting a vehicle 50 reversing. The vehicle 50 comprising the at least one radar unit 51 mounted on the rear 52 of the vehicle 50 and configured to provide distance information R, $\alpha$ when approaching an object 60 fully or partially behind the vehicle 50 under an approaching angle $\alpha$. The method comprises the steps of:

- obtaining S210 distance information R, $\alpha$ to the object 60 from the radar unit 51;
- determining S220 a shortest longitudinal distance C between the corner 56 of the vehicle 50 and the object 60 along the reversing direction y of the vehicle 50 approaching the object 60 based on the distance information R, $\alpha$; and
- providing S230 distance information which is compensated by the approaching angle $\alpha$, based on the shortest longitudinal distance C.

The method 200 may further comprise determining at least one of the following: a speed of the vehicle 50, an acceleration of the vehicle 50, the approaching angle $\alpha$, a reflection distance F, a lateral distance b.

The method 200 may also be a computer-implemented method. A person of skill in the art would readily recognize that steps of various above-described methods may be performed by programmed computers. Embodiments are also intended to cover program storage devices, e.g., digital data storage media, which are machine or computer-readable and encode machine-executable or computer-executable programs of instructions, wherein the instructions perform some or all of the acts of the above-described methods when executed on the computer or processor.

LIST OF REFERENCE SIGNS

| | |
|---|---|
| 50 | vehicle |
| 51 | distance measurement device |
| 51 | radar unit |
| 52 | rear of the vehicle |
| 53 | trailer |
| 54 | sensor devices |
| 56 | (rear) corner of the vehicle |
| 60 | object |
| 65 | reflection point |
| 71 | coverage area of the radar unit |
| 74 | coverage area of the other sensor(s) |
| 100 | reversing assistant device |
| 110 | evaluation unit |
| 120 | breaking control unit |
| 130 | light control unit |
| 140 | vehicle electronic control unit |
| $\alpha$ | approaching angle |
| a | distance between radar unit and the rear corner of the vehicle |
| b | lateral distance between the radar unit and the reflection point |
| C | shortest longitudinal distance |
| d | distance between a and b |
| e | distance between C and F |
| F | longitudinal distance between the rear of the vehicle and the reflection point |
| R | closest distance between radar unit and the object |
| V | speed/direction of moving of the vehicle |
| x | lateral direction (perpendicular to the driving direction) |
| y | longitudinal direction (e.g. driving direction) |

**Claims**

1. A reversing assistance device (100) for a vehicle (50),

the vehicle (50) comprising a radar unit (51) mounted on a rear (52) of the vehicle (50) and configured to provide distance information (R, $\alpha$) to an object (60) that is fully or partially behind the vehicle (50) when approaching the object (60) under an approaching angle $\alpha$,

**characterized by:**

an evaluation unit (110) configured to provide a reversing support function by:

- obtaining from the radar unit (51) the distance information (R, $\alpha$) to the object (60), wherein the radar unit is configured to measure a closest distance R and an approaching angle $\alpha$ from the radar unit to a reflection point (65) of a first return signal;
- determining, based on the distance information (R, $\alpha$), a shortest longitudinal distance C between a corner (56) of the rear (52) of the vehicle (50) and the object (60) along a reversing direction y of the vehicle (50); and

the evaluation unit (110) is further configured to determine:

- a longitudinal distance F between the rear (52) of the vehicle (50) and the reflection point (65) on the object (60) measured along reversing direction y, by using: $F = R \times \sin \alpha$, wherein R is the closest distance R and $\alpha$ the approaching angle;
- the lateral distance b between the radar unit (51) and the reflection point (65) measured along a lateral direction x by using: $b = R \times \cos \alpha$, wherein R is the closest distance and $\alpha$ is the approaching angle;
- the shortest longitudinal distance C, by using: $C = F + (b-a) \times b/F$, wherein "a" is a distance from the radar unit (51) to a rear corner (56) of the vehicle (50),

wherein the closest distance R from the radar unit (51) to the object (60) represents the propagation path of the first return signal, and the line of the closest distance R has a rectangular angle with a surface plane of the object (60).

2. The device as claimed in claim 1,
**characterized in that**
the evaluation unit (110) is further configured to transmit to other systems at least one of the following:

- the approaching angle $\alpha$;
- the closest distance R between the radar unit (51) and a reflection point (65) on the object (60);
- the longitudinal distance F between the rear (52) of the vehicle (50) and the reflection point (65) on the object (60) measured along reversing direction y, by using: $F = R \times \sin \alpha$, wherein R is the closest distance R and $\alpha$ the approaching angle;
- the lateral distance b between the radar unit (51) and the reflection point (65) measured along a lateral direction x by using: $b = R \times \cos \alpha$, wherein R is the closest distance and $\alpha$ is the approaching angle;
- the shortest longitudinal distance C, by using: $C = F + (b-a) \times b/F$, wherein "a" is a distance from the radar unit (51) to a rear corner (56) of the vehicle (50),
- a compensation for an offset of a position of the radar unit (51) from a reference position.

3. The device (100) as claimed in claim 1 or claim 2, wherein the vehicle (50) is operated by a driver or by a driving unit,
**characterized in that**
the evaluation unit (110) is further configured to issue a signal to the driver or the driving unit, in case the determined shortest longitudinal distance C, is shorter than a threshold.

4. The device (100) as claimed in any one of the preceding claims,
**characterized in that**
the evaluation unit (110) is configured to issue an alert signal triggering at least one of the following: an acoustic signal, a visual indicator in a cabin or at the vehicle visible for the driver through the side window or side mirrors, a transmission of a warning to other systems.

5. The device (100) as claimed in any of the preceding claims, wherein the vehicle (50) further comprises at least one further sensor (54) mounted on a side of the vehicle and configured to detect the object (60) at the side of the vehicle (50),
**characterized in that**
the evaluation unit (110) is further configured to receive a detection signal of the further sensor (54) as a confirmation of a presence of the object (60).

6. An electronic control unit, ECU,
   **characterized by**
   a device (100) as claimed in any of the preceding claims.

7. The ECU as claimed in claim 6 and being one of the following:

   - a brake control unit (120),
   - a light control unit (130),
   - a vehicle electronic control unit (140),
   - a radar control unit,
   - a telematic unit.

8. A vehicle (50) including a radar unit (51),
   **characterized by**
   a device (100) as claimed in one of claims 1 to 5 for providing a reversing support function or an ECU as claimed in claim 6 or claim 7.

9. The vehicle (50) as claimed in claim 8, wherein the vehicle includes a tractor and a trailer,
   **characterized in that**
   the radar unit (51) is mounted on the rear (52) of the trailer (53).

10. A method (200) for assisting a vehicle (50) while reversing, the vehicle (50) comprising a radar unit (51) mounted on a rear (52) of the vehicle (50) and configured to measure a closest distance R and an approaching angle $\alpha$ from the radar unit to a reflection point (65) of a first return signal to provide distance information (R, $\alpha$) when approaching an object (60) which is fully or partially behind the vehicle (50) under the approaching angle $\alpha$,
    **characterized by:**

    - obtaining (S210) distance information (R, $\alpha$) to the object (60) from the radar unit (51);
    - determining (S220), based on the distance information (R, $\alpha$), the shortest longitudinal distance C between a corner (56) of the rear (52) of the vehicle (50) and the object (60) along the reversing direction y of the vehicle (50) while approaching the object (60); and
    - determining a closest distance R between the radar unit (51) and a reflection point (65) on the object (60),

    where the step of determining (S220) the shortest longitudinal distance C includes determining:

    - a longitudinal distance F between the rear (52) of the vehicle (50) and the reflection point (65) on the object (60) measured along reversing direction y, by using: $F = R \times \sin \alpha$, wherein R is the closest distance R and $\alpha$ the approaching angle,
    - the lateral distance b between the radar unit (51) and the reflection point (65) measured along a lateral direction x by using: $b = R \times \cos \alpha$, wherein R is the closest distance and $\alpha$ is the approaching angle,

    the shortest longitudinal distance C, by using: $C = F + (b-a) \times b/F$, wherein "a" is a distance from the radar unit (51) to a rear corner (56) of the vehicle (50), wherein the closest distance R from the radar unit (51) to the object (60) represents the propagation path of the first return signal, and the line of the closest distance R has a rectangular angle with a surface plane of the object (60).

11. A computer-readable storage device (300) having software that is stored thereon and is designed to carry out the method for assisting a vehicle (50) while reversing as claimed in claim 10 when the software is executed on a data processing unit, wherein the vehicle (50) comprises a radar unit (51) mounted on a rear (52) of the vehicle (50) and configured to measure a closest distance R and an approaching angle $\alpha$ from the radar unit to a reflection point (65) of a first return signal, when approaching an object (60), wherein the closest distance R from the radar unit (51) to the object (60) represents the propagation path of the first return signal, and the line of the closest distance R has a rectangular angle with a surface plane of the object (60).

**Patentansprüche**

1. Rückfahrhilfsvorrichtung (100) für ein Fahrzeug (50), wobei das Fahrzeug (50) eine Radareinheit (51) umfasst, die an einem Heck (52) des Fahrzeugs (50) angebracht und dazu konfiguriert ist, Abstandsinformationen (R, $\alpha$) zu einem Objekt (60) bereitzustellen, das sich ganz oder teilweise hinter dem Fahrzeug (50) befindet, wenn man sich dem Objekt (60) unter einem Annäherungswinkel $\alpha$ nähert, **gekennzeichnet durch**:

eine Auswerteeinheit (110), die dazu konfiguriert ist, eine Rückfahrunterstützungsfunktion bereitzustellen, **durch**:

- Erhalten der Entfernungsinformationen (R, $\alpha$) zu dem Objekt (60) von der Radareinheit (51), wobei die Radareinheit dazu konfiguriert ist, eine kürzeste Entfernung R und einen Annäherungswinkel $\alpha$ von der Radareinheit zu einem Reflexionspunkt (65) eines ersten Rücksignals zu messen;
- Bestimmen, auf der Grundlage der Abstandsinformation (R, $\alpha$), eines kürzesten Längsabstands C zwischen einer Ecke (56) des Hecks (52) des Fahrzeugs (50) und dem Objekt (60) entlang einer Rückfahrrichtung y des Fahrzeugs (50); und

wobei die Auswerteeinheit (110) weiter dazu konfiguriert ist, Folgendes zu bestimmen:

- einen Längsabstand F zwischen dem Heck (52) des Fahrzeugs (50) und dem Reflexionspunkt (65) auf dem Objekt (60), gemessen entlang der Rückfahrrichtung y, unter Verwendung von: $F = R \times \sin \alpha$, wobei R der kürzeste Abstand R und $\alpha$ der Annäherungswinkel ist;
- den seitlichen Abstand b zwischen der Radareinheit (51) und dem Reflexionspunkt (65), gemessen entlang einer seitlichen Richtung x unter Verwendung von: $b = R \times \cos \alpha$, wobei R der kürzeste Abstand und $\alpha$ der Annäherungswinkel ist;
- den kürzesten Längsabstand C unter Verwendung von: $C = F + (b-a) \times b/F$,

wobei "a" ein Abstand von der Radareinheit (51) zu einer hinteren Ecke (56) des Fahrzeugs (50) ist, wobei der kürzeste Abstand R von der Radareinheit (51) zu dem Objekt (60) den Ausbreitungsweg des ersten Rücksignals darstellt und die Linie des kürzesten Abstands R einen rechtwinkligen Winkel mit einer Oberflächenebene des Objekts (60) aufweist.

2. Vorrichtung nach Anspruch 1, **dadurch gekennzeichnet, dass**
die Auswerteeinheit (110) weiter dazu konfiguriert ist, mindestens einen der Folgenden an andere Systeme zu übermitteln:

- den Annäherungswinkel $\alpha$;
- den kürzesten Abstand R zwischen der Radareinheit (51) und einem Reflexionspunkt (65) am Objekt (60);
- den Längsabstand F zwischen dem Heck (52) des Fahrzeugs (50) und dem Reflexionspunkt (65) am Objekt (60), gemessen entlang der Rückfahrrichtung y, unter Verwendung von: $F = R \times \sin \alpha$, wobei R der kürzeste Abstand R und $\alpha$ der Annäherungswinkel ist;
- den seitlichen Abstand b zwischen der Radareinheit (51) und dem Reflexionspunkt (65), gemessen entlang einer seitlichen Richtung x unter Verwendung von: $b = R \times \cos \alpha$, wobei R der kürzeste Abstand und $\alpha$ der Annäherungswinkel ist;
- den kürzesten Längsabstand C unter Verwendung von: $C = F + (b-a) \times b/F$,

wobei "a" ein Abstand von der Radareinheit (51) zu einer hinteren Ecke (56) des Fahrzeugs (50) ist,

- eine Kompensation eines Versatzes einer Position der Radareinheit (51) gegenüber einer Referenzposition.

3. Vorrichtung (100) nach Anspruch 1 oder Anspruch 2, wobei das Fahrzeug (50) von einem Fahrer oder einer Antriebseinheit bedient wird,
**dadurch gekennzeichnet, dass**
die Auswerteeinheit (110) weiter dazu konfiguriert ist, ein Signal an den Fahrer oder die Antriebseinheit auszugeben, falls der bestimmte kürzeste Längsabstand C kürzer als ein Schwellenwert ist.

4. Vorrichtung (100) nach einem der vorstehenden Ansprüche,
**dadurch gekennzeichnet, dass**
die Auswerteeinheit (110) dazu konfiguriert ist, ein Warnsignal auszugeben, das mindestens eines der Folgenden auslöst: ein akustisches Signal, einen optischen Indikator in einer Kabine oder am Fahrzeug, die für den Fahrer durch die Seitenscheibe oder Seitenspiegel sichtbar ist, eine Übertragung einer Warnung an andere Systeme.

5. Vorrichtung (100) nach einem der vorstehenden Ansprüche, wobei das Fahrzeug (50) weiter mindestens einen weiteren Sensor (54) umfasst, der an einer Seite des Fahrzeugs angebracht und dazu konfiguriert ist, das Objekt (60) an der Seite des Fahrzeugs (50) zu erfassen,
**dadurch gekennzeichnet, dass**
die Auswerteeinheit (110) weiter dazu konfiguriert ist, ein Detektionssignal des weiteren Sensors (54) als Bestätigung für ein Vorhandensein des Objekts (60) zu empfangen.

6. Elektronische Steuereinheit, ECU,
**gekennzeichnet durch**
eine Vorrichtung (100) nach einem der vorstehenden Ansprüche.

7. ECU nach Anspruch 6, die eine der Folgenden ist:

   - eine Bremssteuereinheit (120),
   - eine Lichtsteuereinheit (130),
   - eine elektronische Fahrzeugsteuereinheit (140),
   - eine Radarsteuereinheit,
   - eine Telematikeinheit.

8. Fahrzeug (50) einschließlich einer Radareinheit (51),
**gekennzeichnet durch**
eine Vorrichtung (100) nach einem der Ansprüche 1 bis 5 zur Bereitstellung einer Rückfahrunterstützungsfunktion oder einer ECU nach Anspruch 6 oder Anspruch 7.

9. Fahrzeug (50) nach Anspruch 8, wobei das Fahrzeug eine Zugmaschine und einen Anhänger einschließt,
**dadurch gekennzeichnet, dass**
die Radareinheit (51) am Heck (52) des Anhängers (53) angebracht ist.

10. Verfahren (200) zum Unterstützen eines Fahrzeugs (50) beim Rückwärtsfahren, wobei das Fahrzeug (50) eine Radareinheit (51) umfasst, die an einem Heck (52) des Fahrzeugs (50) angebracht und dazu konfiguriert ist, einen kürzesten Abstand R und einen Annäherungswinkel $\alpha$ von der Radareinheit zu einem Reflexionspunkt (65) eines ersten Rücksignals zu messen, um Entfernungsinformationen (R, $\alpha$) bereitzustellen, wenn man sich einem Objekt (60) nähert, das sich ganz oder teilweise hinter dem Fahrzeug (50) unter dem Annäherungswinkel $\alpha$ befindet, **gekennzeichnet durch**:

   - Erhalten (S210) von Entfernungsinformationen (R, $\alpha$) zu dem Objekt (60) von der Radareinheit (51);
   - Bestimmen (S220), auf der Grundlage der Abstandsinformationen (R, $\alpha$), des kürzesten Längsabstands C zwischen einer Ecke (56) des Hecks (52) des Fahrzeugs (50) und dem Objekt (60) entlang der Rückfahrrichtung y des Fahrzeugs (50) bei Annäherung an das Objekt (60); und
   - Bestimmung des kürzesten Abstands R zwischen der Radareinheit (51) und einem Reflexionspunkt (65) auf dem Objekt (60),

   wobei der Schritt des Bestimmens (S220) des kürzesten Längsabstands C das Bestimmen einschließt von:

   - einem Längsabstand F zwischen dem Heck (52) des Fahrzeugs (50) und dem Reflexionspunkt (65) auf dem Objekt (60), gemessen entlang der Rückfahrrichtung y, unter Verwendung von: $F = R \times \sin \alpha$, wobei R der kürzeste Abstand R und $\alpha$ der Annäherungswinkel ist,
   - dem seitlichen Abstand b zwischen der Radareinheit (51) und dem Reflexionspunkt (65), gemessen entlang einer seitlichen Richtung x unter Verwendung von: $b = R \times \cos \alpha$, wobei R der kürzeste Abstand und $\alpha$ der Annäherungswinkel ist,

   dem kürzesten Längsabstand C, unter Verwendung von: $C = F + (b-a) \times b/F$, wobei "a" ein Abstand von der Radareinheit (51) zu einer hinteren Ecke (56) des Fahrzeugs (50) ist, wobei der kürzeste Abstand R von der Radareinheit (51) zu dem Objekt (60) den Ausbreitungsweg des ersten Rücksignals darstellt und die Linie des kürzesten Abstands R einen rechtwinkligen Winkel mit einer Oberflächenebene des Objekts (60) aufweist.

11. Computerlesbare Speichervorrichtung (300) mit darauf gespeicherter Software, die dazu ausgelegt ist, das Verfahren zur Unterstützung eines Fahrzeugs (50) beim Rückwärtsfahren nach Anspruch 10 auszuführen, wenn die Software auf einer Datenverarbeitungseinheit ausgeführt wird, wobei das Fahrzeug (50)

eine Radareinheit (51) umfasst, die an einem Heck (52) des Fahrzeugs (50) angebracht ist und dazu konfiguriert ist, einen kürzesten Abstand R und einen Annäherungswinkel $\alpha$ von der Radareinheit zu einem Reflexionspunkt (65) eines ersten Rücksignals zu messen, wenn man sich einem Objekt (60) nähert, wobei der kürzeste Abstand R von der Radareinheit (51) zu dem Objekt (60) den Ausbreitungsweg des ersten Rücksignals darstellt und die Linie des kürzesten Abstands R einen rechtwinkligen Winkel mit einer Oberflächenebene des Objekts (60) aufweist.

## Revendications

1. Dispositif d'aide à la marche arrière (100) pour un véhicule (50), le véhicule (50) comprenant une unité radar (51) montée à l'arrière (52) du véhicule (50) et configurée pour fournir des informations de distance (R, $\alpha$) jusqu'à un objet (60) qui se trouve entièrement ou partiellement derrière le véhicule (50) lors de l'approche de l'objet (60) sous un angle d'approche $\alpha$, **caractérisé par** :
une unité d'évaluation (110) configurée pour fournir une fonction de prise en charge de la marche arrière par :

   - l'obtention, depuis l'unité radar (51), des informations de distance (R, $\alpha$) jusqu'à l'objet (60), dans lequel l'unité radar est configurée pour mesurer une distance minimale R la plus proche et un angle d'approche $\alpha$ de l'unité radar à un point de réflexion (65) d'un premier signal de retour ;
   - la détermination, sur la base des informations de distance (R, $\alpha$), d'une distance longitudinale la plus courte C entre un coin (56) de l'arrière (52) du véhicule (50) et l'objet (60) le long d'une direction de marche arrière y du véhicule (50) ; et

   l'unité d'évaluation (110) est en outre configurée pour déterminer :

   - une distance longitudinale F entre l'arrière (52) du véhicule (50) et le point de réflexion (65) sur l'objet (60) mesurée selon la direction de marche arrière y, à l'aide de : $F = R \times \sin \alpha$, dans laquelle R est la distance minimale R la plus proche et $\alpha$ est l'angle d'approche ;
   - la distance latérale b entre l'unité radar (51) et le point de réflexion (65) mesurée le long d'une direction latérale x à l'aide de : $b = R \times \cos \alpha$, dans laquelle R est la distance minimale la plus proche et $\alpha$ est l'angle d'approche ;
   - la distance longitudinale la plus courte C, à l'aide de : $C = F + (b-a) \times b/F$,

      dans laquelle « a » est une distance de l'unité radar (51) à un coin arrière (56) du véhicule (50), dans lequel la distance minimale R la plus proche de l'unité radar (51) à l'objet (60) représente le trajet de propagation du premier signal de retour, et la ligne de la distance minimale R la plus proche présente un angle rectangulaire avec un plan de surface de l'objet (60).

2. Dispositif selon la revendication 1, **caractérisé en ce que**
l'unité d'évaluation (110) est en outre configurée pour transmettre à d'autres systèmes au moins l'un des éléments suivants :

   - l'angle d'approche $\alpha$ ;
   - la distance minimale R la plus proche entre l'unité radar (51) et un point de réflexion (65) sur l'objet (60) ;
   - la distance longitudinale F entre l'arrière (52) du véhicule (50) et le point de réflexion (65) sur l'objet (60) mesurée selon la direction de marche arrière y, à l'aide de : $F = R \times \sin \alpha$, dans laquelle R est la distance minimale R la plus proche et $\alpha$ est l'angle d'approche ;
   - la distance latérale b entre l'unité radar (51) et le point de réflexion (65) mesurée le long d'une direction latérale x à l'aide de : $b = R \times \cos \alpha$, dans laquelle R est la distance minimale la plus proche et $\alpha$ est l'angle d'approche ;
   - la distance longitudinale la plus courte C, à l'aide de : $C = F + (b-a) \times b/F$,

   dans laquelle « a » est une distance de l'unité radar (51) à un coin arrière (56) du véhicule (50),

   - une compensation pour un décalage d'une position de l'unité radar (51) par rapport à une position de référence.

3. Dispositif (100) selon la revendication 1 ou la revendication 2, dans lequel le véhicule (50) est conduit par un conducteur ou par une unité motrice,

**caractérisé en ce que**
l'unité d'évaluation (110) est en outre configurée pour délivrer un signal au conducteur ou à l'unité motrice, dans le cas où la distance longitudinale la plus courte C déterminée est inférieure à un seuil.

4. Dispositif (100) selon l'une quelconque des revendications précédentes,
**caractérisé en ce que**
l'unité d'évaluation (110) est configurée pour délivrer un signal d'alerte déclenchant au moins l'un des éléments suivants : un signal acoustique, un indicateur visuel dans une cabine ou au niveau du véhicule visible par le conducteur à travers la vitre latérale ou les rétroviseurs latéraux, une transmission d'un avertissement à d'autres systèmes.

5. Dispositif (100) selon l'une quelconque des revendications précédentes, dans lequel le véhicule (50) comprend en outre au moins un autre capteur (54) monté sur un côté du véhicule et configuré pour détecter l'objet (60) au niveau du côté du véhicule (50), **caractérisé en ce que**
l'unité d'évaluation (110) est en outre configurée pour recevoir un signal de détection de l'autre capteur (54) comme confirmation d'une présence de l'objet (60).

6. Unité de commande électronique, ECU,
**caractérisée par**
un dispositif (100) selon l'une quelconque des revendications précédentes.

7. ECU selon la revendication 6 qui est l'une parmi :

   - une unité de commande de frein (120),
   - une unité de commande d'éclairage (130),
   - une unité de commande électronique de véhicule (140),
   - une unité de commande de radar,
   - une unité télématique.

8. Véhicule (50) incluant une unité radar (51),
**caractérisé par**
un dispositif (100) selon l'une des revendications 1 à 5 pour fournir une fonction de prise en charge de marche arrière ou une ECU selon la revendication 6 ou la revendication 7.

9. Véhicule (50) selon la revendication 8, dans lequel le véhicule inclut un tracteur et une remorque,
**caractérisé en ce que**
l'unité radar (51) est montée à l'arrière (52) de la remorque (53).

10. Procédé (200) d'aide d'un véhicule (50) pendant une marche arrière, le véhicule (50) comprenant une unité radar (51) montée à l'arrière (52) du véhicule (50) et configurée pour mesurer une distance minimale R la plus proche et un angle d'approche $\alpha$ entre l'unité radar et un point de réflexion (65) d'un premier signal de retour, afin de fournir des informations de distance (R, $\alpha$) à l'approche d'un objet (60) qui se trouve entièrement ou partiellement derrière le véhicule (50) sous l'angle d'approche $\alpha$, **caractérisé par** :

   - l'obtention (S210) d'informations de distance (R, $\alpha$) jusqu'à l'objet (60) à partir de l'unité radar (51) ;
   - la détermination (S220), sur la base des informations de distance (R, $\alpha$), de la distance longitudinale la plus courte C entre un coin (56) de l'arrière (52) du véhicule (50) et l'objet (60) le long de la direction de marche arrière y du véhicule (50) à l'approche de l'objet (60) ; et
   - la détermination d'une distance minimale R la plus proche entre l'unité radar (51) et un point de réflexion (65) sur l'objet (60),

   où l'étape de détermination (S220) de la distance longitudinale la plus courte C inclut la détermination de :

   - une distance longitudinale F entre l'arrière (52) du véhicule (50) et le point de réflexion (65) sur l'objet (60) mesurée selon la direction de marche arrière y, à l'aide de : $F = R \times \sin \alpha$, dans laquelle R est la distance minimale R la plus proche et $\alpha$ est l'angle d'approche ;
   - la distance latérale b entre l'unité radar (51) et le point de réflexion (65) mesurée le long d'une direction latérale x à l'aide de : $b = R \times \cos \alpha$, dans laquelle R est la distance minimale la plus proche et $\alpha$ est l'angle d'approche ;

la distance longitudinale la plus courte C, à l'aide de : C = F + (b-a) × b/F, dans laquelle
« a » est une distance entre l'unité radar (51) et un coin arrière (56) du véhicule (50), dans lequel la distance minimale R la plus proche de l'unité radar (51) à l'objet (60) représente le trajet de propagation du premier signal de retour, et la ligne de la distance minimale R la plus proche présente un angle rectangulaire avec un plan de surface de l'objet (60).

11. Dispositif de stockage lisible par ordinateur (300) sur lequel est stocké un logiciel conçu pour mettre en œuvre le procédé d'aide à un véhicule (50) pendant une marche arrière selon la revendication 10 lorsque le logiciel est exécuté sur une unité de traitement de données, dans lequel le véhicule (50) comprend

une unité radar (51) montée à l'arrière (52) du véhicule (50)
et configurée pour mesurer une distance minimale R la plus proche et un angle d'approche a de l'unité radar à un point de réflexion (65) d'un premier signal de retour, à l'approche d'un objet (60), dans lequel la distance minimale R la plus proche de l'unité radar (51) à l'objet (60) représente le trajet de propagation du premier signal de retour, et la ligne de la distance minimale R la plus proche présente un angle rectangulaire avec un plan de surface de l'objet (60).

Fig. 1

Fig. 2

Fig. 3

Fig. 4

Fig. 5

obtaining distance information to the object,
from the radar device — S210

determining the shortest longitudinal distance
between the corner of the rear side of the
commercial vehicle and an object along the
reversing direction of the commercial vehicle
approaching the object — S220

providing distance information which is
compensated by the approaching angle,
based on the shortest longitudinal distance — S230

200

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6268803 B1
- DE 102009007990 A1